(19)

Europäisches
Patentamt
European
Patent Office
Office européen
des brevets

(11) **EP 2 793 123 A1**

(12) **EUROPEAN PATENT APPLICATION**

(43) Date of publication:
**22.10.2014 Bulletin 2014/43**

(51) Int Cl.:
***G06F 7/72*** (2006.01)

(21) Application number: **13305493.2**

(22) Date of filing: **16.04.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Gemalto SA**<br>**92190 Meudon (FR)**<br><br>(72) Inventors:<br> • **Hamzi, Nabil**<br>  **13705 La Ciotat (FR)**<br> • **Villegas, Karine**<br>  **13705 La Ciotat (FR)** |

(54) **Method to securely execute a modular exponentiation**

(57)    The present invention relates to a method to execute a modular exponentiation $R=X^e \bmod N$, said method implementing several variable registers and an indicator register m and performing looped calculations. In the invention each loop includes at least two operations from values stored in variable registers, said operations depending on the value stored in m and on the value of the bit(s) of the exponent currently processed, m indicating if the calculation is completed for the current exponent bit at the end of the operations in the current loop.

## Description

## FIELD OF THE INVENTION

The present invention relates to a method to execute a modular exponentiation defined by the following mathematical formula:

R=$X^e$ mod N, e being an exponent having a size of s bits, X being a variable, N being a modulus larger than X, R being the result of the modular exponentiation operation.

The invention relies on the use of several variable registers and an indicator register m.

In a variant the invention also concerns the equivalent operation, the multiplication of (or by) a point while using cryptography based on elliptic curve.

The invention also pertains to a device implementing the method of the invention as embedded cryptography for products.

## BACKGROUND OF THE INVENTION

There are a lot of ways to implement secure exponentiations but none of them consider templates-attacks. Some are doing pre-computations and are not secure. Others are not based on pre-computations (i.e. standard implementation of MM3, k-ary, sliding window ...) and are secure against side channel attacks.

This is the case for the Montgomery Powering Ladder (M.Joye and S.M. Yen: The Montgomery Powering Ladder, CHES 2002) that has a complexity of two time of exponent length. Furthermore it has to be noted that this method, implemented in a secure way, supposes that hardware could perform "in-place" multiplication.

This is also the case of the method called "Square and always multiply" described in EP1493078. In this algorithm, as for Montgomery Powering Ladder, always 2 operations are performed per bit, a square and a multiplication, but if the multiplication is not needed (bit value = 0) then a fake multiplication is performed.

The 1ary exponentiation is not secure when one considers Single Power (or Electromagnetic) Analysis (noted as SPA/SEMA) and a 1ary Atomic exponentiation has thus been developed. It is described in EP1254408B1. This method process 0.75 bit of the secret per loop and compute one operation per loop. It has a complexity of 1.5. It can be noticed that, when result could not be store in place, atomic method needs a copy or an address swapping.

The above presented exponentiation methods are supposed to be resistant to SPA and additional counter-measure against Correlation/Differential Power analysis (noted as CPA/DPA) could also be added. However against template-attacks nothing specific has been proposed yet regarding modular exponentiation. This is a first aim of the invention to counter template attacks.

Furthermore, the hardware constraints of the operands are not at all addressed in the above presented exponentiation methods.

In particular, none of the above presented modular exponentiations suppose that the architecture doesn't provide a "result in-place" multiplication, that is to say the result area cannot be the same than the operands.

Further alternative and advantageous solutions for executing an exponentiation or the equivalent operation in Elliptic Curve Cryptography (ECC) would, accordingly, be desirable in the art.

## SUMMARY OF THE INVENTION

The present invention aims at avoiding, or at least making more difficult the above-mentioned malicious template attacks while securing the exponentiation against side-channel attacks.

The present invention is defined, in its broadest sense, as a method to execute a modular exponentiation defined by the following mathematical formula: R=$X^e$ mod N, e being an exponent having a size of s bits, X being a variable, N being a modulus larger than X, R being the result of the modular exponentiation operation; said method implementing several variable registers and an indicator register m, said method being **characterized in that** it comprises the following execution steps comprising steps a, b and c, referred to as initialization steps, steps d, e and f, referred to as calculation steps, and step g, referred to a termination step:

a) initializing variable registers, at least one of the variable registers with 1 or a constant according to the modular multiplication used, this last variable register being intended to store a current intermediate result, and one of the variable registers with the variable X or a multiple of X mod N according to the modular multiplication used;

b) initializing indicator register m with 0

c) initializing an incremental value i with s-1; while i>0,

d) performing at least two operations from values stored in variable registers, first operation being a square of the current intermediate result or a multiplication by X of the current intermediate result, depending on the value stored in the indicator register m and second operation being a square of the current intermediate result from the first operation or a multiplication by X of the current intermediate result from the first operation depending on the value stored in m and on the value of $e_i$, $e_i$ being the bit i in the binary representation of e therefore run through from the most significant bit $e_{s-1}$ to the least significant bit $e_0$;

e) updating m in function of current exponent bit $e_i$ and m value, m indicating if the calculation is completed for the current exponent bit $e_i$ at the end of the operations in d);

f) updating i in function of current index i, of exponent bits $e_i$ and $e_{i-1}$ and m value,

calculation being looped to step d) while i>0;

and if i=0, g) proceeding to a termination step, said termination step returning an error message when $e_0$ is null and the value in m indicates the calculation is not completed for the current exponent bit or returning the result of at least a last operation, the operation(s) depending on the indication given by m and on the value of $e_0$.

The invention proposes to process 1.5 bits of the exponent by loop and is thus designated by terms 1.5ary exponentiation or method in the following. In comparison with square and always multiply, 1.5ary method of the invention performs only effective operations and is thus faster as the complexity is in 1.5 times s.

In comparison with the 1ary atomic exponentiation, 1.5ary performs less "Jump" as two operations are process by each loop. 1.5ary is faster than Atomic and does not require large number copies which are required in case of absence of result in-place multiplication. Indeed the invention doesn't need to copy the result into the operand. Meanwhile, the invention prevents from side channel analysis noted as SCA.

For 1.5ary, an exponent bit could be processed through 2 different executions whereas for the atomic it is always the same. It renders template attacks more difficult.

The method of the invention works similar to a 7 states machine. The 7 states are linked together and various paths for the same bit value are possible. Calculations corresponding to one single bit of the exponent can be processed in a single loop or in two loops. In a single loop, operations for one whole bit, two whole bits or for parts of one of two bits can be processed according to the invention. Indeed, exactly the same operation could be performed by treating a different state. In this context, it is difficult for an attacker to construct states templates and paths templates. It renders more difficult to retrieve exponent bits using templates.

According to an advantageous embodiment, said termination step returns an error message when $e_0$ is null and the value in m indicates the calculation is not completed for the current exponent bit, returns the result of a last square operation of the current intermediate result if $e_0$ is null and the value in m indicates the calculation is completed for the current exponent bit, returns the result of a last square of the current intermediate result and a last multiplication of the current intermediate result by X if $e_0=1$ and the value if m indicates the calculation is completed for the current exponent bit, returns the result of a last operation of multiplication of the current intermediate result by X if $e_0=1$ and the value in m indicates the calculation is not completed for the current exponent bit.

In this embodiment of the invention, any incoherency is detected at the end of the exponent processing. Calculation is thus ended by taking into account the last value of the index.

In a preferred embodiment, the value stored in m is calculated in order to be null when the calculation is completed for the current exponent bit and is equal to 1 otherwise.

It is of course to be understood that any other type of functioning of the indicator register m, in term of initialization and of modification during the modular exponentiation is concerned by the invention as soon as the indicator register enables to indicate that one operation remains to be done for the currently processed bit. The same comment can be done about the loop incremental data i as soon as the totality of the bits are processed. According to a first implementation, two variable registers R0 and R1 are used, step a) including the initialization of R0 and R1 to 1 and X and step c) consisting in performing the following operations:

$$R0 \leftarrow R0.Rm \bmod N$$

$$R0 \leftarrow R0.Rei\&\neg m \bmod N.$$

This implementation requires the hardware being able to accept in place result.

According to an advantageous feature, an additional register is used for calculations to avoid any result in-place situation and an even number of operations is performed in each loop.

The method of the invention presents the originality to permit the use of such an additional register without prejudice in terms of security and of performances. It enables to implement the invention using hardware where results in place are not possible.

In a particular implementation, three variable registers $R_0$, $R_1$ and $R_2$ are used, step a) including the initialization of $R_0$, $R_1$ and $R_2$ to 1, 1 and X and step c) consisting in performing the following operations:

$$R_0 \leftarrow R_1.R_{1+m} \bmod N;$$

$$R_1 \leftarrow R_0.R_{(ei\&\neg m)<<1} \bmod N.$$

The use of three registers enables to keep the result of the calculation in register R1 while R0 serves to store each intermediary result in the loop.

In a specific embodiment of the invention, each loop implements a multiple of two operations, and thus comprising the steps of:

d') performing 2n operations, n integer, from values stored in variable registers, each operation being a square of the current intermediate result or a multiplication by X of the current intermediate result, depending on the value stored in the indicator register m and on the value of successive $e_i$;

e') updating m in function of current exponent bits $e_i$ and m value, m indicating if the calculation is completed for the current exponent bit $e_i$ at the end of the operations in d');

f') updating i in function of current index i, of the values of the successive exponent bits and of m value.

This embodiment proposes to do a multiple of 2 operations in each loop. Performing an even number of operations enables to always have result in the same register. This embodiment is thus particularly adapted for the kind of hardware where no result in place is possible. It has to be noted here that a determined odd number of operations greater than two could be performed per loop if result in place is possible. This very last embodiment is included in the largest definition of the invention defined in first claim.

In this embodiment, the method advantageously further includes a step of calculating $X^3$, step d') being such that it performs 2n operations, each operation being a square of the current intermediate result, a multiplication by X of the current intermediate result or a multiplication by $X^3$ depending on the value stored in the indicator register m and on the value of successive $e_i$; said termination step further guaranteeing the result consistency.

This advantageous feature enables to use a partial pre-computation that can be used inside the loops themselves as soon as a plurality >2 of bits is susceptible to be processed in one single loop. For example, with $X^3$ pre-computed, it is possible to process three or four successive bits of the exponent in one single loop having four operations.

In a particular embodiment, the method is adapted to cryptography based on Elliptic curve over F(p) or $F(2^m)$ where the modular exponentiation corresponds to a point multiplication defined by the following mathematical formula:

Q=[d].P d being a scalare having a size of s bits, P being a point on the elliptic curve used for the system, Q being the point result of the point multiplication, said method implementing several variable registers and an indicator register m, said method being **characterized in that** it comprises the following execution steps comprising steps a, b and c, referred to as initialization steps, steps d, e and f, referred to as calculation steps, and step g, referred to a termination step:

a) initializing variable registers, at least one of the variable registers with the point at the infinity, this last variable register being intended to store a current intermediate result, and one of the variable registers with the variable P or a multiple of P according to the modular multiplication used;

b) initializing indicator register m with 0

c) initializing an incremental value i with s-1;

while i>0,

d) performing at least two operations from values stored in variable registers, first operation being a point doubling of the current intermediate result or a point addition by P of the current intermediate result, depending on the value stored in the indicator register m and second operation being a point doubling of the current intermediate result from the first operation or a point addition by P of the current intermediate result from the first operation depending on the value stored in m and on the value of $d_i$, $d_i$ being the bit i in the binary representation of d therefore run through from the most significant bit $d_{s-1}$ to the least significant bit do;

e) updating m in function of current exponent bit $d_i$ and m value, m indicating if the calculation is completed for the current exponent bit $d_i$ at the end of the operations in d);

f) updating i in function of current index i, of exponent bits $d_i$ and $d_{i-1}$ and m value,

calculation being looped to step d) while i>0;

and if i=0, g) proceeding to a termination step, said termination step returning an error message when $d_0$ is null and the value in m indicates the calculation is not completed for the current exponent bit or returning the result of at least a last operation, the operation(s) depending on the indication given by m and on the value of do.

This implementation corresponds to the application of the principles of the invention to protocols based on the elliptic curve cryptography (ECC), that will likely be largely used in the next years. These protocols are described in particular in Guide to Elliptic Curve Cryptography, Darrel Hankerson, Alfred Menezes, Scott Vanstone, Chap 3.3.1.

The present invention also concerns a device implementing a method to execute a modular exponentiation as defined in the invention. Said device comprises several variable registers and an indicator register m and is **characterized in that** it further comprises:

- an initialization module intended to initialize variable registers, at least one of the variable registers with 1, this last variable register being intended to store a current intermediate result, and one of the variable registers with the variable X; to initialize indicator register m with 0, to initialize an incremental value i with s-1; and

- a calculation module for, while i>0, performing at least two operations from values stored in variable registers, first operation being a square of the current intermediate result or a multiplication by X of the current intermediate result, depending on the value stored in the indicator register m and second operation being a square of the current intermediate result from the first operation or a multiplication by X of the current intermediate result from the first operation depending on the value stored in m and on the value of $e_i$, $e_i$ being the bit i in the binary representation of e therefore run through from the most significant bit $e_{s-1}$ to the least significant bit $e_0$; for updating m in function of current exponent bit $e_i$ and m value, m indicating if the calculation is completed for the current exponent bit $e_i$ at the end of the operations in d); for updating i in function of current index i, of exponent bits $e_i$ and $e_{i-1}$ and m value, for looping calculations while i>0; and, if i=0, for proceeding to a termination step, said termination step returning an error message when $e_0$ is null and the value in m indicates the calculation is not completed for the current exponent bit or returning the result of at least a last operation, the operation(s) depending on the indication given by m and on the value of $e_0$.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawing set forth in detail certain illustrative aspects and are indicative of but a few of the various ways in which the principles of the embodiments may be employed. Other advantages and novel features will become apparent from the following detailed description when considered in conjunction with the drawing and the disclosed embodiments are intended to include all such aspects and their equivalents.

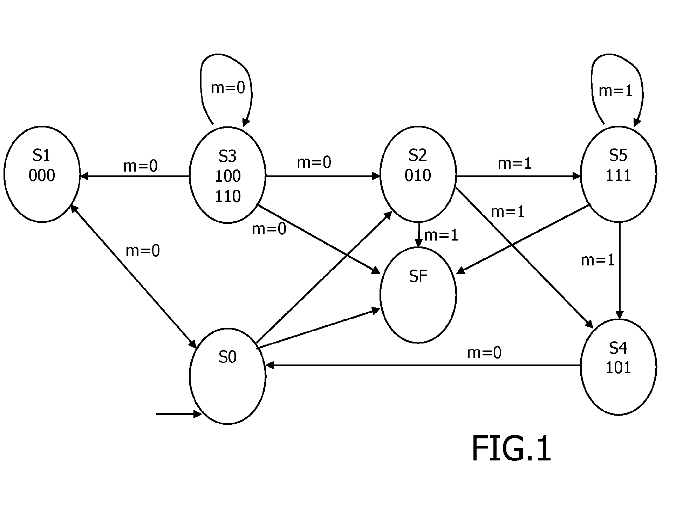

- Figure 1 schematically represents the operations of the method of the invention as an automaton having several states.

## DETAILED DESCRIPTION OF EMBODIMENTS OF THE INVENTION

In the below detailed description, reference is made to the accompanying drawing that shows, by way of illustration, a specific embodiment in which the invention may be practiced. This embodiment is described in sufficient detail to enable those skilled in the art to practice the invention.

The invention aims in the computation of $X^e \bmod$ N efficiently. N, X, e are three large integers such that X<N. s, the bit length of e: $|e| = s$. We suppose that e is a secret element.

The computation has to be done in a way that bits of e are treated equivalently. Here binary form of e is $e = (e_{s-1}, e_{s-2}, \dots, e_1, e_0)$.

Below is a detailed description of the algorithm of the invention consisting in a 1.5-ary exponentiation without results in place possible.

Inputs of the algorithm are x, e and n and the output is $X^e \bmod$ N.

In a preferred embodiment, three variable registers and an indicator register are initialized as follows:

    R0<-1
    R1<-1
    R2<-X
    m<-0
    A loop register is also initialized in i<-n-1
    Then the algorithm proceeds to the following calculations.
    R0<-R1.R(1+m)mod n
    R1<-R0.R((e_i&¬m)<<1)mod n
    It can be here noted that no result in place is used in this loop.
    temp<- [e_i&m+(¬e_i&¬m)]
    m<-e_(i-1)&temp
    i<-i-1-(¬e_(i-1)&temp)
    The pair of calculation is repeated while i>0

At last, if i=0, a termination step is operated. This termination step comprises different operations depending on the value in m and the value of the last bit $e_0$.

Thus, if$((e_0,m)=(0,0))$, the algorithm does R0<-R1.R1 and returns (R0), if $((e_0,m)=(0,1))$ the algorithm returns an error, if$((e_0,m)=(1,0))$, the algorithm does R0<-R1.R1 and R1<-R0.R2 and returns (R1). At last if $((e_0,m)=(1,1))$ the algorithm does R0<-R1.R2 and returns (R0).

Otherwise, if i is not null (i.e. i<0) when entering in the termination step, the algorithm returns R1.

In an embodiment adapted to hardware where result in place is possible, the algorithm can be as follows.

First two variable registers and an indicator register are initialized:

    R0<-1
    R1<-X
    m<-0
    A loop indicator is also initialized in i<-n-1.

While i>0, the following calculations are done by pair in loop:

    R0<-R0.R(m)
    R0<-R0.R(e_i&¬m)
    It can be noted here that results in place are required.
    temp<- [e_i&m+(¬e_i&¬m)]
    m<-e_(i-1)&temp
    i<-i-1-(¬e_(i-1)&temp)

Then if i=0, if$((e_0,m)=(0,0))$, R0<-R0.R0 is calculated and the algorithm returns (R0). If$((e_0,m)=(0,1))$ the algorithm returns an error. If$((e_0,m)=(1,0))$, the algorithm proceeds to the calculations of R0<-R0.R0 and R0<-R0.R1 and returns (R0). If$((e_0,m)=(1,1))$ R0<-R0.R1 is calculated and the algorithm returns (R0).

Otherwise, if i is not null (i.e. i<0) when entering in the termination step, the algorithm returns R1.

This algorithm can indeed be seen as an automaton as the one shown on figure 1. Indeed it is a finite 7-state machine, each state corresponding to one loop. It is useful to consider the triplet $(e_i, e_{i-1}, m)$ at the input of each loop, which contains current bit, the next bit and m which indicates if a bit is not completely processed. SO shows an initial state. It corresponds to the state at the beginning of the exponentiation calculation or to the state where all correlation with previous bits are solved. Next state will thus be dependant only on the following bits in the exponent. S1 is a first state where the triplet is $(e_i=0, e_{i-1}=0, m=0)$ corresponding to two consecutive bits at 0. As in a loop two operations are performed, these two bits will be treated in one loop.

S2 is a second state where the triplet is $(e_i=0, e_{i-1}=1, m=0)$. Here 2 squares are to be performed but the last bit $e_{i-1}$ would not be entirely processed, at the end of the loop. Thus 1.5 bits is treated as a multiplication is left. This is indicated by setting m to 1 for the next loop.

S3 is a third state where the triplet is $(e_i=1, e_{i-1}=0, m=0)$ or $(e_i=1, e_{i-1}=1, m=0)$. Only 1 bit will here be treated in the loop, as a bit 1 implies 2 operations. m is null at the output of the loop.

S4 is a fourth state where the triplet is $(e_i=1, e_{i-1}=0, m=1)$. Here a multiplication is ongoing. It is necessary to start by this left operation and as second operation a square is performed. 1.5 bits is treated in this loop. As no operation is ongoing, m is null at the output.

S5 is a fifth state where the triplet is $(e_i=1, e_{i-1}=1, m=1)$. As in S4, a multiplication is first performed and a square. For the next loop a multiplication is ordered and m is modified to 1. 1.5 bits is treated here.

It has to be noted that triplet (0,0,1) and (0,1,1) cannot happen except if an error occurred. m=1 means that a multiplication is ongoing so it implies that $e_i = 1$ at the input of a state.

SF illustrates the processing of a final state performing the left operations if any.

In an illustrative example, the bit sequence is 0110 followed by X bits. Here the first triplet being $e_i=0, e_{i-1}=1, m=0$, a state S2 is performed. Thus in the first loop, operations for 0 and for a half for 1 are performed.

The following triplet is thus (1,1,1) which correspond to state S5. In this second loop, one remaining operation (multiplication) is processed for the first 1 and one (square) is processed for the second 1.

The following triplet is thus (1,0,1) which is a state S4. In the third loop, one operation (multiplication) is done for 1 and one (square) is done for 0. m is thus again null when the loop is ended. The corresponding state is thus state S0 from which a new sequence of states will be determined from values of next X bits in the exponent.

By circulating from one state to another, the whole set of bits of the exponent can thus be treated according to the invention.

In other implementation of the invention, the number of bits treated within a loop could be greater than two. Indeed the number of operations performed in one loop must be even in order to be adapted to hardware wherein "result in place" is not possible. It has to be further noted that it could be useful in this last situation to pre-compute $R^3$ in order to limit the number of operations to be done by calling this pre-computed value instead of doing the two necessary calculations.

The invention distinguishes with methods having a 2 bit complexity. Indeed, in those methods, the number of operations is fixed whatever the exponent value which is not the case for the present invention. The invention distinguishes with other methods without pre-computation having a <2 bit complexity because in atomic algorithm, each exponent word load is done after a given number of operations whereas with the invention this number could not be the same. Indeed, in classical <2 bit complexity methods, the loading of a new exponent word is mostly determined by word's hamming weight. In our method, it is determined by bits chain values processed, and thus it is variable. Such a feature is detectable using side channel leakage. Moreover, if a branch can be detected, counting the modular multiplication between branches enables to know if it is always 1 operation per loop (1ary atomic), always 2 operations per loop (1.5ary) or varies from 1 to 2 operations per loop (1 ary).

In methods with pre computation: several multiplications are performed before the modular exponentiation which is not the case for the invention. There is an exception when $X^3$ is calculated but in any case the structure of the calculation would have different signature in side channel.

The above detailed description is, therefore, not to be taken in a limiting sense, and the scope of the present invention is defined only by the appended claims, appropriately interpreted, along with the full range of equivalents to which the claims are entitled. The method of the invention implements several variable registers and an indicator register m and performs looped calculations. The principle of the invention is such that each loop includes a determined number of operations, at least two, from values stored in variable registers, said operations depending on the value stored in m and on the value of the bit(s) of the exponent currently processed, m indicating if the calculation is completed for the current exponent bit at the end of the operations in the current loop.

It is also noted that the determined number of operations can be fixed along the whole process or be modifiable in the course of the process, this modification being independent of the values of the bits of the exponent. For example, the number of operations is two at the beginning and change to four after a given number of loops.

**Claims**

1. Method to execute a modular exponentiation defined by the following mathematical formula:

   $R = X^e \bmod N$, e being an exponent having a size of s bits, X being a variable, N being a modulus larger than X, R being the result of the modular exponentiation operation;
   said method implementing several variable registers and an indicator register m, said method being **characterized in that** it comprises the following execution steps comprising steps a, b and c, referred to as initialization steps, steps d, e and f, referred to as calculation steps, and step g, referred to a termination step:

   a) initializing variable registers, at least one of the variable registers with 1 or a constant according to the modular multiplication used, this last variable register being intended to store a current intermediate result, and one of the variable registers with the variable X or a multiple of X mod N according to the modular multiplication used;
   b) initializing indicator register m with 0
   c) initializing an incremental value i with s-1; while i>0,
   d) performing a determined number of operations, at least two, from values stored in variable registers, first operation being a square of the current intermediate result or a multiplication by X of the current intermediate result, depending on the value stored in the indicator register m and second operation being a square of the current intermediate result from the first operation or a multiplication by X of the current intermediate result from the first operation depending on the value stored in m and on the value of $e_i$, $e_i$ being the bit i in the binary representation of e therefore run through from the most significant bit $e_{s-1}$ to the least significant bit $e_0$;
   e) updating m in function of current exponent bit $e_i$ and m value, m indicating if the calculation is completed for the current exponent bit $e_i$ at the end of the operations in d);
   f) updating i in function of current index i, of exponent bits $e_i$ and $e_{i-1}$ and m value,

   calculation being looped to step d) while i>0;
   and if i=0, g) proceeding to a termination step, said termination step returning an error message when $e_0$ is null and the value in m indicates the calculation is not completed for the current exponent bit or returning the result of at least a last operation, the operation(s) depending on the indication given by m and on the value of $e_0$.

2. Method according to claim 1, wherein said termination step returns an error message when $e_0$ is null and the value in m indicates the calculation is not completed for the current exponent bit, returns the result of a last square operation of the current intermediate result if $e_0$ is null and the value in m indicates the calculation is completed for the current exponent bit, returns the result of a last square of the current intermediate result and a last multiplication of the current intermediate result by X if $e_0=1$ and the value if m indicates the calculation is completed for the current exponent bit, returns the result of a last operation of multiplication of the current intermediate result by X if $e_0=1$ and the value in m indicates the calculation is not completed for the current exponent bit.

3. Method according to one of previous claim, wherein two variable registers $R_0$ and $R_1$ are used, step a) including the initialization of $R_0$ and $R_1$ to 1 and X and step c) consisting in performing the following operations:

   $R_0 \leftarrow R_0 . R_m \bmod N$;
   $R_0 \leftarrow R_0 . R_{ei \& \neg m} \bmod N$.

4. Method according to one of claims 1 and 2, wherein an additional register is used for calculations to avoid any result in-place situation and an even number of operations is performed in each loop.

5. Method according to claim 4, wherein three variable registers $R_0$, $R_1$ and $R_2$ are used, step a) including the initialization of $R_0$, $R_1$ and $R_2$ to 1, 1 and X and step c) consisting in performing the following operations:

   $R_0 \leftarrow R_1 . R_{1+m} \bmod N$;
   $R_1 \leftarrow R_0 . R_{(ei \& \neg m) << 1} \bmod N$.

6. Method according to one of claims 1 to 5, wherein each loop implements a multiple of two operations, and thus comprising the steps of:

   d') performing 2n operations, n integer, from values stored in variable registers, each operation being a square of the current intermediate result or a multiplication by X of the current intermediate result, depending on the value stored in the indicator register m and on the value of successive $e_i$;
   e') updating m in function of current exponent bits $e_i$ and m value, m indicating if the calculation is completed for the current exponent bit $e_i$ at the end of the operations in d');

f') updating i in function of current index i, of the values of the successive exponent bits and of m value.

7. Method according to claim 6, wherein it further includes a step of calculating $X^3$, step d') being such that it performs 2n operations, each operation being a square of the current intermediate result, a multiplication by X of the current intermediate result or a multiplication by $X^3$ depending on the value stored in the indicator register m and on the value of successive $e_i$; said termination step further guaranteeing the result consistency.

8. Method according to claim 1 and adapted to cryptography based on Elliptic curve over F(p) or F($2^m$) where the modular exponentiation corresponds to a point multiplication defined by the following mathematical formula:

Q=[d].P d being a scalare having a size of s bits, P being a point on the elliptic curve used for the system, Q being the point result of the point multiplication,

said method implementing several variable registers and an indicator register m, said method being **characterized in that** it comprises the following execution steps comprising steps a, b and c, referred to as initialization steps, steps d, e and f, referred to as calculation steps, and step g, referred to a termination step:

a) initializing variable registers, at least one of the variable registers with the point at the infinity, this last variable register being intended to store a current intermediate result, and one of the variable registers with the variable P or a multiple of P according to the modular multiplication used;
b) initializing indicator register m with 0
c) initializing an incremental value i with s-1; while i>0,
d) performing at least two operations from values stored in variable registers, first operation being a point doubling of the current intermediate result or a point addition by P of the current intermediate result, depending on the value stored in the indicator register m and second operation being a point doubling of the current intermediate result from the first operation or a point addition by P of the current intermediate result from the first operation depending on the value stored in m and on the value of $d_i$, $d_i$ being the bit i in the binary representation of d therefore run through from the most significant bit $d_{s-1}$ to the least significant bit do;
e) updating m in function of current exponent bit $d_i$ and m value, m indicating if the calculation is completed for the current exponent bit $d_i$ at the end of the operations in d);
f) updating i in function of current index i, of exponent bits $d_i$ and $d_{i-1}$ and m value, calculation being looped to step d) while i>0; and if i=0, g) proceeding to a termination step, said termination step returning an error message when do is null and the value in m indicates the calculation is not completed for the current exponent bit or returning the result of at least a last operation, the operation(s) depending on the indication given by m and on the value of do.

9. Device implementing a method to execute a modular exponentiation as defined in one of the previous claims, said device comprising several variable registers and an indicator register m, said device being **characterized in that** it further comprises:

- an initialization module intended to initialize variable registers; and
- a calculation module for, while i>0, performing at least two operations from values stored in variable registers; for updating m in function of current exponent bit $e_i$ and m value; for updating i in function of current index i, of exponent bits $e_i$ and $e_{i-1}$ and m value; for looping calculations while i>0; and, if i=0, for proceeding to the termination step.

FIG.1

Europäisches
Patentamt

European
Patent Office

Office européen
des brevets

# EUROPEAN SEARCH REPORT

**Application Number**

EP 13 30 5493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2003/053621 A1 (BENOIT OLIVIER [CA])<br>20 March 2003 (2003-03-20)<br>* abstract *<br>* paragraph [0015] - paragraph [0025] *<br>* paragraph [0063] - paragraph [0074] *<br>* claims 2,3 *<br>& EP 1 254 408 B1 (GEMPLUS CARD INT [FR])<br>15 October 2003 (2003-10-15)<br>* the whole document * | 1-3,6,8,<br>9<br><br>4,5,7 | INV.<br>G06F7/72 |
| Y | JOYE M: "Recovering lost efficiency of exponentiation algorithms on smart cards", ELECTRONICS LETTERS, IEE STEVENAGE, GB, vol. 38, no. 19,<br>12 September 2002 (2002-09-12), pages 1095-1097, XP006019065,<br>ISSN: 0013-5194, DOI: 10.1049/EL:20020748<br>* abstract *<br>* algorithms (vi) and (viii) * | 4,5 | |
| Y | LIM C H ET AL: "MORE FLEXIBLE EXPONENTIATION WITH PRECOMPUTATION", ADVANCES IN CRYPTOLOGY (CRYPTO). SANTA BARBARA, AUG. 21 - 25, 1994; [PROCEEDINGS OF THE ANNUAL INTERNATIONAL CRYPTOLOGY CONFERENCE (CRYPTO)], BERLIN, SPRINGER, DE,<br>vol. CONF. 14, 21 August 1994 (1994-08-21)<br>, pages 95-107, XP000467656,<br>ISBN: 978-3-540-58333-2<br>* abstract *<br>* line 1 - page 97, line 11 *<br>* page 98, line 1 - page 99, line 17 *<br>-----<br>-/-- | 7 | **TECHNICAL FIELDS SEARCHED (IPC)**<br><br>G06F |

The present search report has been drawn up for all claims

| Place of search | Date of completion of the search | Examiner |
|---|---|---|
| The Hague | 25 July 2013 | Post, Katharina |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 13 30 5493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. CHARI, J.R.RAO, P. ROHATGI: "Template Attacks", CRYPTOGRAPHIC HARDWARE AND EMBEDDED SYSTEMS, CHES 2002, PROCEEDINGS; [LECTURE NOTES IN COMPUTER SCIENCE], BERLIN : SPRINGER, DE, 31 December 2003 (2003-12-31), pages 13-28, XP002705976, ISBN: 978-3-540-42521-2 * the whole document * ----- | 1-9 | |
| | | | **TECHNICAL FIELDS SEARCHED (IPC)** |

The present search report has been drawn up for all claims

| Place of search | Date of completion of the search | Examiner |
|---|---|---|
| The Hague | 25 July 2013 | Post, Katharina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                          EP 13 30 5493

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2013

| Patent document cited in search report | Publication date | Patent family member(s) | Publication date |
|---|---|---|---|
| US 2003053621 A1 | 20-03-2003 | AU 3554701 A | 07-08-2001 |
| | | CN 1397035 A | 12-02-2003 |
| | | DE 60100992 D1 | 20-11-2003 |
| | | DE 60100992 T2 | 11-11-2004 |
| | | EP 1254408 A2 | 06-11-2002 |
| | | FR 2804225 A1 | 27-07-2001 |
| | | JP 3878853 B2 | 07-02-2007 |
| | | JP 2003521010 A | 08-07-2003 |
| | | MX PA02006801 A | 23-10-2002 |
| | | US 2003053621 A1 | 20-03-2003 |
| | | WO 0155838 A2 | 02-08-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1493078 A
- EP 1254408 B1